# EUROPÄISCHE PATENTSCHRIFT

(11) **EP 3 129 844 B1**
(45) Veröffentlichungstag und Bekanntmachung des Hinweises auf die Patenterteilung: **24.07.2019**
(21) Anmeldenummer: 16718638.6
(22) Anmeldetag: 19.04.2016
(51) Int. Cl.: G06F 1/26, G06F 13/40, G06F 13/42

(54) **COMPUTERSYSTEM, ERWEITERUNGSKOMPONENTE, HILFSVERSORGUNGSKOMPONENTE UND DEREN VERWENDUNG**
COMPUTER SYSTEM, EXPANSION COMPONENT, AUXILIARY SUPPLY COMPONENT, AND USE THEREOF
SYSTÈME INFORMATIQUE, COMPOSANTS D'EXTENSION, COMPOSANTS D'ALIMENTATION AUXILIAIRE ET LEUR UTILISATION

(30) Priorität: 01.07.2015 DE 102015110611
(43) Veröffentlichungstag der Anmeldung: 15.02.2017
(73) Patentinhaber: Fujitsu Client Computing Limited, Kawasaki-shi, Kanagawa-ken 211-8588 (JP)
(72) Erfinder: Pilz, Erich, 86343 Königsbrunn (DE)
(74) Vertreter: Epping - Hermann - Fischer
(86) Internationale Anmeldenummer: PCT/EP2016/058653
(87) Internationale Veröffentlichungsnummer: WO 2017/001079

(56) Entgegenhaltungen:
- DE-U1- 9 315 507
- US-A1- 2007 028 126
- US-A1- 2011 252 249

## Beschreibung

Die Erfindung betrifft ein Computersystem umfassend eine Stromversorgungseinheit zum Bereitstellen einer Betriebsenergie für das Computersystem und eine mit der Stromversorgungseinheit verbundene Systemplatine mit einer Mehrzahl von Erweiterungsanschlüssen zum Anschließen einer korrespondierenden Mehrzahl von Erweiterungskomponenten. Darüber hinaus betrifft die Erfindung eine Erweiterungskomponente und eine Hilfsversorgungskomponente zur Verwendung in einem derartigen Computersystem.

Computersysteme mit einer Stromversorgungseinheit und einer Systemplatine mit Erweiterungsanschlüssen zum Anschließen von Erweiterungskomponenten sind aus dem Stand der Technik bekannt. Beispielsweise ist eine Vielzahl von so genannten Personal Computern (PCs) mit einem eingebauten Netzteil und einer Systemplatine bekannt. Typischerweise werden direkt auf der Systemplatine angeordnete Komponenten, wie beispielsweise ein Prozessor, und in Steckverbinder der Systemplatine eingesteckte Erweiterungskarten, wie beispielsweise Grafikkarten, über auf der Systemplatine vorgesehene Spannungsversorgungsleitungen mit einer Betriebsspannung des Netzteils versorgt. Andere Komponenten, wie insbesondere Massenspeicherlaufwerke, werden über eine gesonderte Kabelverbindung direkt aus dem Netzteil mit einer Betriebsenergie versorgt.

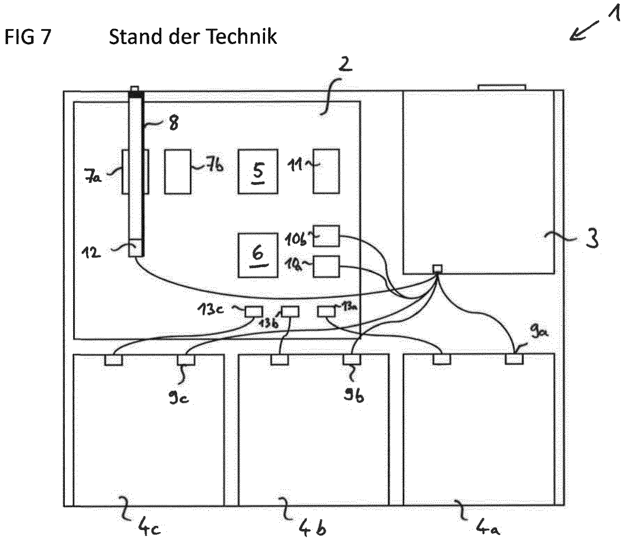

Figur 7 zeigt schematisch eine beispielhafte Systemkonfiguration eines Computersystems 1 gemäß dem Stand der Technik. Das Computersystem 1 umfasst eine Systemplatine 2, ein eingebautes Netzteil 3 sowie drei Speicherlaufwerke 4a bis 4c. Auf der Systemplatine 2 sind im Ausführungsbeispiel ein Prozessor 5, ein Chipsatz 6 sowie zwei Erweiterungsanschlüsse 7a und 7b in Form von Steckverbindern zur Aufnahme von Erweiterungskarten vorgesehen. Im Ausführungsbeispiel ist in den ersten Erweiterungsanschluss 7a eine Grafikkarte 8 eingesteckt.

Das Netzteil 3 wandelt eine von außen bereitgestellte Netzwechselspannung in eine oder eine Mehrzahl von geregelten Gleichspannungen zur Versorgung der Komponenten des Computersystems 1 um. In der Konfiguration gemäß Figur 7 gibt das Netzteil 3 diese Versorgungsspannungen über Kabelverbindungen und entsprechende Steckverbinder an die einzelnen Komponenten ab. Insbesondere ist das Netzteil 3 über jeweils einen Steckverbinder 9a bis 9c mit den Laufwerken 4a bis 4c verbunden. Des Weiteren ist das Netzteil 3 über zwei weitere Kabelverbindungen und Steckverbinder 10a und 10b mit der Systemplatine 2 verbunden. Die über die Steckverbinder 10a und 10b bereitgestellten Betriebsspannungen werden auf die verschiedenen Komponenten der Systemplatine 2, einschließlich eventuell an die Erweiterungsanschlüsse 7a und 7b angeschlossene Komponenten weiterverteilt. Hierzu ist im Ausführungsbeispiel zusätzlich ein Spannungswandler 11 vorgesehen, der die üblicherweise von dem Netzteil 3 bereitgestellten Gleichspannungen von 5 und 12 Volt in eine geeignete Spannung zum Betrieb des Prozessors 5, beispielsweise 1,5 Volt, umwandelt.

Im Ausführungsbeispiel ist in dem Erweiterungsanschluss 7a eine besonders leistungsfähige Grafikkarte 8 aufgenommen. Die Grafikkarte 8 weist insbesondere eine Leistungsaufnahme auf, die jenseits einer in einer Spezifikation eines Bussystems oder des Erweiterungsanschlusses 7a angegebenen Leistungsgrenze liegt. Beispielsweise handelt es sich bei dem Erweiterungsanschluss 7a um einen Slot gemäß dem PCI Express (PCIe) Standard mit einer maximalen Leistungsabgabe von 75 Watt per Slot und bei der Grafikkarte 8 um eine Hochleistungsgrafikkarte mit einer Leistungsaufnahme von bis zu 150 Watt. Um die zusätzliche, zum Betrieb der Grafikkarte 8 erforderliche Leistung zur Verfügung zu stellen, weist das Computersystem 1 gemäß Figur 7 eine weitere Kabelverbindung mit einem weiteren Steckverbinder 12 auf, über den die Grafikkarte 8 direkt an das Netzteil 3 angeschlossen ist.

Zur Übertragung von Daten und Befehlen zwischen den Speicherlaufwerken 4a bis 4c und der Systemplatine 2 sowie den darauf angeordneten Komponenten, wie insbesondere dem Chipsatz 6, dienen drei Datenanschlüsse 13a bis 13c.

Computersysteme wie das in der Figur 7 dargestellte erlauben einen modularen und flexiblen Systemaufbau. Dabei ist es jedoch von Nachteil, dass das Netzteil 3 derart dimensioniert werden muss, dass es alle denkbaren Systemkonfigurationen mit einer hinreichenden Leistung versorgen kann. Ebenfalls muss das Netzteil 3 Kabelverbindungen und Steckverbinder 9, 10 und 12 gemäß einer Vielzahl von Standards für eine Vielzahl von möglichen Komponenten aufweisen. Dies führt in vielen Systemkonfigurationen zu einer Überdimensionierung des Netzteils 3 und einer damit einhergehenden Verringerung der Energieeffizienz. Zudem verursacht ein derartiger Systemaufbau auf Seiten des Herstellers unnötige Kosten.

Aus der EP 1 600 844 A2 sind ein Verfahren und eine Vorrichtung zum Bereitstellen einer erhöhten Leistung an eine Speicheranordnung eines Speichersubsystem eines Computers bekannt, um die Speicherleistung und Betriebsstabilität zu steigern. Insbesondere soll ein Leistung bereitgestellt werden, die größer ist als der durch die Hauptplatine des Computers verfügbare Lesitungspegel. Die Vorrichtung umfasst eine Zuführungseinrichtung zum Zuführen einer Eingangsspannung zu dem Speicher-Subsystem direkt von einer Leistungsquelle, wie insbesondere einem ATX-Netzteil.

Aus der DE 696 36 406 T2 ist eine Vorrichtung zur Spannungsregelung in einem Computersystem mit einem Spannungsreglermodul bekannt. Die Vorrichtung ist dadurch gekennzeichnet, daß das Spannungsreglermodul abnehmbar ist und eine Steckaufnahmen-Baugruppe aufweist, die eine Mehrzahl von auf dem abnehmbaren Spannungsreglermodul montierte Steckaufnahmen zum Übermitteln von Steuersignalen und Spannungen enthält. Die Vorrichtung weist ferner einen Steckverbinder auf, der die Steckaufnahmen-Baugruppe des abnehmbaren Reglermoduls aufnimmt, wobei der Steckverbinder mit dem Computersystem über eine Mehrzahl von Pins gekoppelt ist.

Die US 2007/0028126 A1 betrifft ein Computersystem und ein Schnittstellenkartenmodul. Das Schnittstellenkartenmodul umfasst eine Schnittstellenkarte und einen Adapter zum Anschluss an eine externe Leistungsquelle. Die Schnittstellenkarte umfasst wenigstens einen Schnittstellenkartenanschluss auf einer ersten Seite der Schnittstellenkarte. Der Adapter ist elektrisch mit dem Schnittstellenkartenanschluss verbunden. Der Adapter stellt eine erste Leistung zum Betrieb der Schnittstellenkarte und zum Bereitstellen eines Teils oder der gesamten Leistung, die von der Schnittstellenkarte verbraucht wird, zur Verfügung.

Aus der DE 93 15 507 U1 ist eine Vorrichtung zur Spannungsversorgung elektrischer bzw. elektronischer Periphergeräte von Computern bekannt. Darin wird eine Vorrichtung aus einer in einen für eine Einsteckkarte ausgebildeten Slot des Computers einsteckbaren Einsteckkarte vorgeschlagen, die mit Kontaktstellen bezüglich des Erdkontaktes sowie mindestens eines der Kontakte: +5 Volt, +12 Volt und/oder -12 Volt und NC des Computerslots in Einstecklage in Verbindung steht und dass die Kontaktstellen über Leiterbahnen der Steckkarte in einem ausserhalb des Slots liegenden Bereich abgreifbar sind.

Die US 2011/0252249 A1 stellt ein Verfahren zur Bereitstellung von Stromversorgung für Grafikkarten bereit. Das Verfahren gemäß der vorliegenden Erfindung umfasst das Beziehen einer Stromversorgung von Grafikkarten von außerhalb des Computerchassis.

Es ist eine Aufgabe der vorliegenden Erfindung, alternative Aufbaukonzepte für Computersysteme zu beschreiben. Bevorzugt sollen die beschriebenen Computersysteme einen hohen Grad an Modularität erlauben und gleichzeitig energieeffizient im Betrieb und kostengünstig in der Herstellung sein.

Diese Aufgabe wird erfindungsgemäß durch ein Computersystem mit den Merkmalen des Anspruchs 1 gelöst.

Der Erfinder des vorliegenden Aufbaukonzepts hat erkannt, dass durch die Zurverfügungstellung eines Leistungsbudgets eines ungenutzten Erweiterungsanschlusses an eine an einem anderen Erweiterungsanschluss angeschlossene Erweiterungskomponente auf eine größerer Dimensionierung einer Stromversorgungseinheit in vielen Systemkonfigurationen verzichtet werden kann. Beispielsweise kann einer Erweiterungskomponente das Leistungsbudget von zwei benachbarten Erweiterungsanschlüssen zur Verfügung gestellt werden, sofern an den zweiten Erweiterungsanschluss keine weitere Erweiterungskomponenten angeschlossen oder deren Leistungsbudget zumindest nicht ausgeschöpft ist. Dabei wird ein Gesamtleistungsbudget des Computersystems in jeder möglichen Konfiguration eingehalten, ohne die Ausgangsleistung einer Stromversorgungseinheit zu erhöhen. Gleichzeitig müssen eventuell vorgesehene Spezialverbinder zur Versorgung einzelner Komponenten nur dann mittels einer Hilfsversorgungskomponente in dem Computersystem bereitgestellt werden, wenn diese tatsächlich benötigt werden, was die Produktionskosten reduziert.

Typischerweise umfasst die erste Erweiterungskomponente einen internen Stromverbraucher. Optional ist die erste Erweiterungskomponente auch dazu eingerichtet, wenigstens einen Teil der von ihr aufgenommenen Leistung an eine Zusatzkomponente, wie beispielsweise ein Peripheriegerät, abzugeben. Dabei weisen der interne Stromverbraucher und, soweit vorhanden, die Zusatzkomponente zusammengenommen ein Leistungsbudget auf, das größer ist als das dem ersten Erweiterungsanschluss zugeordnete Leistungsbudget.

Ein derartiges Stromversorgungskonzept für ein Computersystem eignet sich insbesondere zur Stromversorgung leistungsfähiger Grafikkomponenten, wie beispielsweise Grafikkarten, die in einen Steckverbinder gemäß der Anschlussnorm PCI Express (PCIe) oder einen ähnlichen Erweiterungsanschluss eingesteckt sind und die Zuführung einer zusätzlichen Betriebsspannung über ein Versorgungskabel erfordern. Erfindungsgemäß können derartige Grafikkarten ohne die Vorsehung eines speziellen Netzteils mit einem speziellen Versorgungskabel sowie einem diesem Versorgungskabel zugeordneten Leistungsbudget verwendet werden.

Bei der Hilfsversorgungskomponente kann es sich zum Beispiel um eine in den zweiten Erweiterungsanschluss eingesteckte Hilfsversorgungskarte oder einen eingesteckten Hilfsversorgungsstecker handeln. Derartige, überwiegend oder völlig passiv aufgebaute Hilfsversorgungskomponenten erlauben eine einfache und kostengünstige Bereitstellung weiterer Betriebsenergie aus dem Leistungsbudget, das dem zweiten Erweiterungsanschluss zugeordnet ist, an andere Komponenten.

Alternativ kann die Hilfsversorgungskomponente einen auf der Systemplatine in der Nähe des zweiten Erweiterungsanschlusses angeordneten Hilfsversorgungsanschluss sowie ein mittels eines Steckverbinders mit dem Hilfsversorgungsanschluss verbundenes Hilfsversorgungskabel umfassen. Dabei blockiert das Hilfsversorgungskabel im eingesteckten Zustand die Nutzung des zweiten Erweiterungsanschlusses durch eine weitere Erweiterungskomponente. Durch die räumlich benachbarte Anordnung des zweiten Erweiterungsanschlusses und des Hilfsversorgungsanschlusses wird die alternative, nicht jedoch gleichzeitige Nutzung der beiden Anschlüsse und des damit verbundenen Leistungsbudgets auf einfache Weise sichergestellt. Zudem kann in diesem Fall auf die Vorsehung einer speziellen Hilfsversorgungskarte verzichtet werden.

Gemäß einem zweiten Aspekt der Erfindung wird eine Erweiterungskomponente zum Anschluss an einen ersten Erweiterungsanschluss einer Systemplatine mit wenigstens zwei Erweiterungsanschlüssen eines Computersystems gemäß dem ersten Aspekt beschrieben. Beispielsweise handelt es sich um eine Erweiterungskarte zum Einstecken in einem ersten Steckverbinder einer Systemplatine. Dabei ist dem ersten und zweiten Erweiterungsanschluss ein jeweils festes Leistungsbudget zur Versorgung einer zugehörigen Erweiterungskomponente zugeordnet. Die Erweiterungskomponente umfasst einen ersten Steckverbinder zum Anschluss der Erweiterungskomponente an den ersten Erweiterungsanschluss, einen zweiten Steckverbinder zum Zuführen einer von dem Leistungsbudget des ersten Erweiterungsanschlusses unabhängigen Betriebsenergie von einer an einem zweiten Erweiterungsanschluss der Systemplatine angeschlossenen Hilfsversorgungskomponente und wenigstens einen dritten Steckverbinder zum Versorgung einer Zusatzkomponente, insbesondere eines externen Peripheriegeräts, mit einer Betriebsenergie. Die Erweiterungskomponente umfasst des Weiteren eine mit dem ersten Steckverbinder, dem zweiten Steckverbinder und dem wenigstens einen dritten Steckverbinder elektrisch verbundene Leistungssteuerung, die dazu eingerichtet ist, die über den ersten Steckverbinder aufgenommene Leistung auf das feste Leistungsbudget zu begrenzen und zumindest einen Teil einer von der Erweiterungskomponente aufgenommenen und/oder über dem wenigstens dritten Steckverbinder abgegebenen Betriebsenergie, die das feste Leistungsbudget übersteigt, von der Hilfsversorgungskomponente über den zweiten Steckverbinder aufzunehmen.

Eine derartige Erweiterungskomponente erlaubt die Versorgung von Zusatzkomponenten, insbesondere von externen Peripheriegeräten, mit einer Betriebsenergie, die oberhalb eines Leistungsbudgets eines Erweiterungsanschlusses einer Systemplatine liegt. Beispielsweise können eine Mehrzahl von über USB-Anschlüsse angeschlossene Peripheriegeräte mit einer Gesamtleistung versorgt werden, die oberhalb der Leistungsfähigkeit eines internen Bussystems oder Steckverbinders, wie beispielsweise eines PCIe-Erweiterungsslots liegt.

Gemäß einem dritten Aspekt der Erfindung wird eine Hilfsversorgungskomponente zum Anschluss an einen zweiten Erweiterungsanschluss einer Systemplatine mit wenigstens zwei Erweiterungsanschlüssen eines Computersystems gemäß dem ersten Aspekt beschrieben. Beispielsweise handelt es sich um eine Hilfsversorgungskarte zum Einstecken in einen zweiten Steckverbinder einer Systemplatine. Dabei ist dem ersten und zweiten Erweiterungsanschluss jeweils ein festes Leistungsbudget zur Versorgung einer zugehörigen Erweiterungskomponente zugeordnet. Die Hilfsversorgungskomponente umfasst einen ersten Steckverbinder zum Anschluss der Hilfsversorgungskomponente an den zweiten Erweiterungsanschluss und einen zweiten Steckverbinder zum Abführen wenigstens eines Teils des dem zweiten Erweiterungsanschluss zugeordneten Leistungsbudgets an eine in einem ersten Erweiterungsanschluss der Systemplatine angeordneten Erweiterungskomponente des Computersystems.

Eine derartige Hilfsversorgungskomponente eignet sich insbesondere zur Versorgung von besonders leistungsfähigen Erweiterungskomponenten, beispielsweise gemäß dem zweiten Aspekt, in einem modularen Computersystem, beispielsweise gemäß dem ersten Aspekt.

Der vorliegenden Erfindung liegt unter anderem der Gedanke zugrunde, einen Teil eines einem zweiten Erweiterungsanschluss einer Systemplatine eines Computersystems zugeordneten Leistungsbudgets zur zumindest teilweisen Versorgung einer an einem ersten Erweiterungsanschluss der Systemplatine angeschlossenen Erweiterungskomponente mit einer Betriebsenergie zu verwenden, wobei jedem Erweiterungsanschluss ein festes Leistungsbudget zugeordnet ist.

Weitere vorteilhafte Ausgestaltungen der Erfindung sind in der nachfolgenden Beschreibung von Ausführungsbeispielen und den angehängten Ansprüchen offenbart.

Die Erfindung wird nachfolgend anhand von Ausführungsbeispielen unter Bezugnahme auf die angehängten Figuren im Detail beschrieben. In den Figuren zeigen:
- Figur 1: ein Computersystem gemäß einer ersten Ausgestaltung der Erfindung,
- Figur 2: eine Hilfsversorgungskarte gemäß der ersten Ausgestaltung der Erfindung,
- Figur 3: ein Computersystem gemäß einer zweiten Ausgestaltung der Erfindung,
- Figur 4: ein Computersystem gemäß einer dritten Ausgestaltung der Erfindung,
- Figur 5: eine Erweiterungskomponente gemäß einer vierten Ausgestaltung der Erfindung,
- Figur 6: eine Erweiterungskomponente gemäß einer fünften Ausgestaltung der Erfindung und
- Figur 7: eine Systemkonfiguration eines Computersystems gemäß dem Stand der Technik.

Aus Gründen der Übersichtlichkeit werden in den einzelnen Figuren dieselben Bezugszeichen für gleiche oder gleich wirkende Komponenten unterschiedlicher Ausgestaltungen verwendet. Soweit nicht anders angegeben, gilt die Beschreibung der jeweiligen Komponenten dabei auch für die anderen Ausgestaltungen. Mehrere Instanzen gleichartiger Komponenten sind mit einem alphabetischen Suffix gekennzeichnet. Sofern auf alle Komponenten eines Typs Bezug genommen wird, wird auf die Verwendung des alphabetischen Suffixes verzichtet.

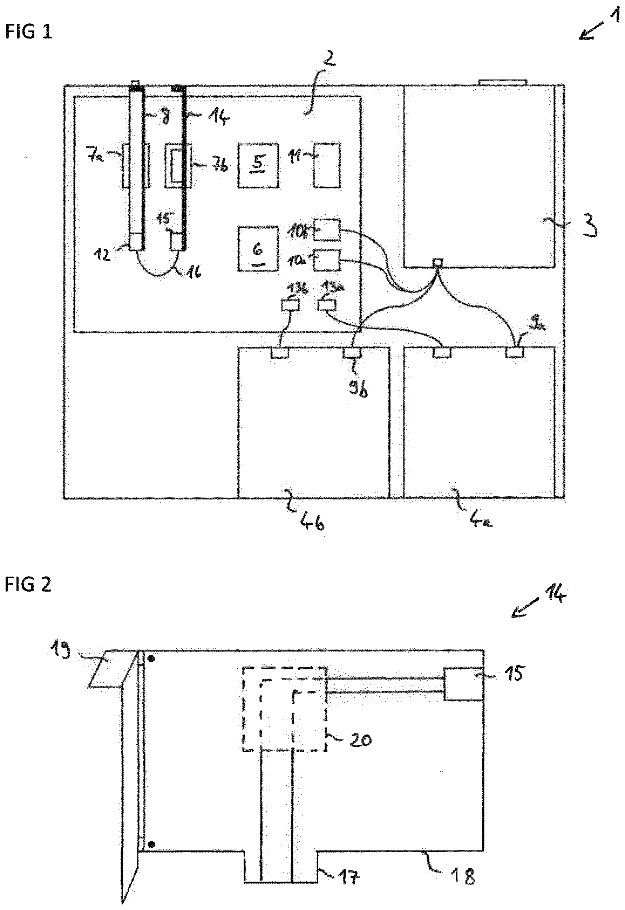

Figur 1 zeigt ein Computersystem 1 gemäß einer möglichen Ausgestaltung der Erfindung. Das Computersystem 1 umfasst im Wesentlichen dieselben Komponenten 2 bis 11 wie das Computersystem 1 gemäß Figur 7. Davon abweichend wird in dem Computersystem 1 gemäß Figur 1 eine verhältnismäßig leistungsschwache Stromversorgungskomponente in Form eines Netzteils 3 mit nur vier Anschlusskabeln und entsprechenden Steckverbindern 9a, 9b, 10a und 10b zur Versorgung der Komponenten 4a, 4b und 2 verwendet. In einer alternativen, nicht dargestellten Ausgestaltung erfolgt die Spannungsversorgung des Computersystems 1 durch wenigstens einen direkt auf der Systemplatine 2 angeordneten Spannungsregler. Dies bietet sich insbesondere für sehr kompakt aufgebaute Coputersysteme 1 an.

In dem Computersystem 1 gemäß Figur 1 sind nur zwei Speicherlaufwerke 4a und 4b vorgesehen, die über korrespondierende Steckverbinder 9a und 9b des Netzteils 3 mit einer Betriebsenergie versorgt werden und mit entsprechenden Datenanschlüssen 13a und 13b mit der Systemplatine 2 verbunden sind. Die Betriebsenergie für alle weiteren Komponenten wird über die Steckverbinder 10a und 10b an die Systemplatine 2 übertragen und von dieser an die übrigen Komponenten verteilt.

Zur Versorgung der Grafikkarte 8 ist in dem Computersystem 1 gemäß Figur 1 eine Hilfsversorgungskarte 14 vorgesehen. Die Hilfsversorgungskarte 14 weist einen Steckverbinder 15 zum Anschluss eines Hilfsversorgungskabels 16 auf, der mit einem weiteren Steckverbinder 12 zur Versorgung der Grafikkarte 8 verbunden ist. Im Ausführungsbeispiel handelt es sich bei den beiden Steckverbindern 7a und 7b der Systemplatine 2 beispielsweise um so genannte PCIe X16-Slots mit einer maximalen Leistungsabgabe von 75 Watt. Durch Kombination der Leistungsbudgets der beiden Erweiterungsanschlüsse 7a und 7b mittels der Hilfsversorgungskarte 14 kann der Grafikkarte 8 somit insgesamt eine Leistung von 150 Watt zur Verfügung gestellt werden, ohne dass das Netzteil 3 jenseits seiner Leistungsfähigkeit belastet wird.

Figur 2 zeigt schematisch den Aufbau der Hilfsversorgungskarte 14. Die Hilfsversorgungskarte 14 weist neben dem Steckverbinder 15 einen standardkonformen Steckverbinder 17 zum Einsetzen in den Erweiterungsanschluss 7b auf. Der Steckverbinder 17 ist Teil einer Leiterplatte 18, in die der Steckverbinder 15 im dargestellten Ausführungsbeispiel direkt eingelötet ist. Die Leiterplatte 18 dient dabei zur elektrischen Verbindung des Steckverbinders 17 mit dem Steckverbinder 15. In der dargestellten Ausgestaltung für einen Desktop-Computer dient sie zudem zur mechanischen Befestigung der Hilfsversorgungskarte 14. Hierzu ist des Weiteren ein Slotwinkel 19 an der Leiterplatte 18 befestigt. In einer alternativen, nicht dargestellten Ausgestaltung für einen Server-Computer zum Einschub in ein Serverrack kann auf den Slotwinkel verzichtet werden, sofern der Steckverbinder 17 und/oder andere Mittel zur Befestigung der Hilfsverorgungskarte 14 ausreichen. In einer weiteren, ebenfalls nicht dargestellten Variante der Hilfsversorgungskarte 14 weist diese keinen aufgelöteten Steckverbinder 15 auf. Stattdessen ist das Hilfsversorgungskabel 16 direkt mit der Leiterplatte 18 verlötet und endet in dem Steckverbinder 12 zum Anschluss an die Grafikkarte 8.

Optional ist auf der Hilfsversorgungskarte 14 eine Strombegrenzungsschaltung 20 vorgesehen. Die Strombegrenzungsschaltung 20 dient zum Beschränken der über den Steckverbinder 17 aufgenommenen Leistung auf ein vorgegebenes Leistungsbudget. Dabei kann es sich um eine rein passive Komponente, wie beispielsweise eine Schmelzsicherung, oder um eine aktive elektronische Schaltung handeln, die insbesondere den Typ des Erweiterungsanschlusses 7 erkennt, in den die Hilfsversorgungskarte 14 eingesteckt wurde. Durch Vorsehung einer zusätzlichen Strombegrenzungsschaltung 20 kann somit eine Beschädigung oder Überlastung des Erweiterungsanschlusses 7b, der Sytemplatine 2 und des Netzteils 3 in jedem Fall ausgeschlossen werden.

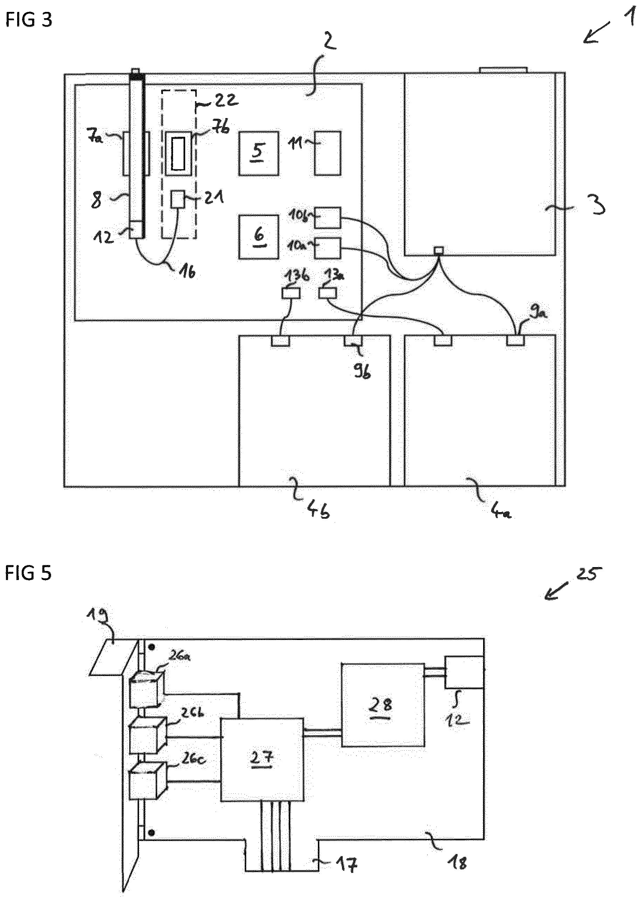

Figur 3 zeigt ein zweites Ausführungsbeispiel eines Computersystems 1 gemäß der vorliegenden Erfindung. Der Aufbau des Computersystems 1 entspricht im Wesentlichen dem des Computersystems 1 gemäß Figur 3. Anstelle der Vorsehung einer zusätzlichen Hilfsversorgungskarte 14 wird die Grafikkarte 8 gemäß Figur 3 über ein Hilfsversorgungskabel 16 mit zusätzlicher Betriebsenergie versorgt, das mittels eines entsprechenden Steckers in einen Hilfsversorgungsanschluss 21 der Systemplatine 2 eingesteckt ist. Anstelle der Grafikkarte 8 kann auch eine sonstige Komponete des Computersystems 1 über das Hilfsversorgungskabel 16 mit einer Betriebsenergie versorgt werden.

Der Hilfsversorgungsanschluss 21 ist in einem Freihaltebereich 22 des Erweiterungsanschlusses 7b angeordnet. Die meisten Standards für Erweiterungskomponenten, wie beispielsweise der PCI Express Standard, definieren derartige Freihaltebereiche 22. Durch die Anordnung des Hilfsversorgungsanschlusses 21 in beziehungsweise unterhalb dieses Freihaltebereichs 22 wird die gleichzeitige Nutzung des Hilfsversorgungsanschlusses 21 und des Erweiterungsanschlusses 7b praktisch verhindert. Ist das Hilfsversorgungskabel 16 in den Hilfsversorgungsanschluss 21 eingesteckt, verhindert es mechanisch, dass eine weitere Erweiterungskomponente in den Erweiterungsanschluss 7b eingesteckt wird. Umgekehrt verhindert eine in dem Erweiterungsanschluss 7b angeordnete Erweiterungskomponente die Verwendung des Hilfsversorgungsanschlusses 21. Durch diese einfache mechanische Maßnahme kann eine doppelte Verwendung des Leistungsbudgets des zweiten Erweiterungsanschlusses 7a vermieden werden.

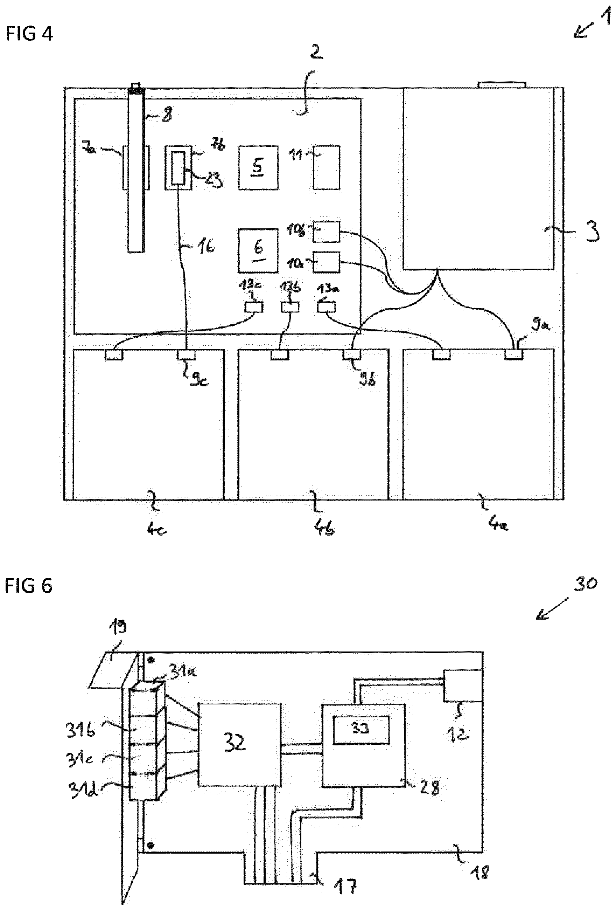

Figur 4 zeigt eine weitere Ausgestaltung eines Computersystems 1 gemäß der vorliegenden Erfindung. In Abwandlung der Computersysteme 1 gemäß den Figuren 1 und 3 weist das Computersystem 1 gemäß Figur 4 ein zusätzliches Speicherlaufwerk 4c und einen zusätzlichen Datenanschluss 13c zum Anschluss des dritten Speicherlaufwerks 4c auf. Anders als das Computersystem 1 gemäß Figur 7 weist das Netzteil 3 jedoch nach wie vor nur zwei Kabelverbindungen mit entsprechenden Steckverbindern 9a und 9b zur Versorgung der ersten beiden Speicherlaufwerke 4a und 4b auf. Um das dritte Speicherlaufwerk 4c dennoch mit einer Betriebsenergie zu versorgen, ist in den Erweiterungsanschluss 7b der Systemplatine 2 ein spezieller Hilfsversorgungsstecker 23 eingesetzt, der über ein Hilfsversorgungskabel 16 mit einem weiteren Steckverbinder 9c verbunden ist. In diesem Fall verhindert der Hilfsversorgungsstecker 23 die Nutzung des Erweiterungsanschlusses 7b durch weitere Erweiterungskarten. Stattdessen wird das Leistungsbudget des Erweiterungssteckplatzes im Bereich des Erweiterungsanschlusses 7b zum Betrieb des dritten Speicherlaufwerks 4c genutzt. Auch in diesem Fall kann daher ein verhältnismäßig einfaches Netzteil 3 mit einem relativ geringen Leistungsbudget verwendet werden.

Die Mitverwendung von Leistungsbudgets anderer Erweiterungsanschlüsse lässt sich auch zur Versorgung anderer leistungsfähiger Komponenten als Grafikkarten und internen Speicherlaufwerken 4 einsetzen. Zwei Beispiele für eine derartige Verwendung sind in den Figuren 5 und 6 dargestellt.

Figur 5 zeigt eine USB-Erweiterungskarte 25. Die USB-Erweiterungskarte 25 umfasst eine Leiterplatte 18 mit einem Steckverbinder 17 zum Einstecken der USB-Erweiterungskarte 25 in einen Erweiterungsanschluss 7. Auf Seiten eines Slotwinkels 19 umfasst die Erweiterungskarte 25 im Ausführungsbeispiel drei USB-Anschlüsse 26a bis 26c. Bei den USB-Anschlüssen 26 handelt es sich beispielsweise um so genannte Powered USB-Anschlüsse gemäß dem USB-Standard 3.0 oder einem darauf folgenden Standard, wie etwa dem USB-Standard 3.1. Auf der Leiterplatte 18 ist ein USB-Controller 27 angeordnet, der zum Datenaustausch von an den USB-Anschlüssen 26 angeschlossenen Peripheriegeräten mit einer Komponente der Systemplatine 2, beispielsweise dem Chipsatz 6, dient. Neben den üblichen Funktionen eines USB-Hostcontrollers übernimmt der USB-Controller 27 zum Beispiel eine Protokollumsetzung zwischen dem USB-Protokoll und dem PCIe-Protokoll. Darüber hinaus überwacht oder konfiguriert der USB-Controller 27 die Leistungsaufnahme von an die USB-Anschlüsse 26 angeschlossenen Peripheriegeräte.

Sofern die über die USB-Anschlüsse 26 abgegebene Leistung im Bereich des Leistungsbudgets des Erweiterungsanschlusses 7, beispielsweise eines PCIe-Steckverbinders mit einer maximalen Leistungsabgabe von 75 Watt, liegt, erfolgt die Versorgung der Peripheriegeräte über die über den Steckverbinder 17 bereitgestellte Leistung.

Erkennt der USB-Controller 27 jedoch, dass durch den Anschluss besonders leistungsfähiger oder besonders zahlreicher Peripheriegeräte die Leistungsgrenze von 75 Watt überschritten wird, steuert sie eine Leistungssteuerung 28 der USB-Erweiterungskarte 25 derart an, dass diese zumindest einen Teil der nötigen Betriebsenergie über einen weiteren Steckverbinder 12 aufnimmt. Der Steckverbinder 12 kann über ein Hilfsversorgungskabel 16 (in der Figur 5 nicht dargestellt) beispielsweise mit einer Hilfsversorgungskarte 14 gemäß den Figuren 1 und 2, einem Hilfsversorgungsanschluss 21 gemäß Figur 3 oder einem Hilfsversorgungsstecker 23 gemäß Figur 4 verbunden werden. Alternativ ist auch eine Versorgung über ein zusätzliches Versorgungskabel eines speziell für die Stromversorgung von leistungsfähigen Grafikkarten 8 vorbereitetes Netzteil 3 gemäß Figur 7 möglich.

Erkennt die Leistungsversorgung 28, dass über den Steckverbinder 12 keine oder keine ausreichende Betriebsenergie zur Verfügung gestellt wird, gibt sie eine entsprechende Statusmeldung an den USB-Controller 27 zurück, der daraufhin dem oder den Peripheriegeräten mitteilt, seine beziehungsweise ihre Leistungsaufnahme entsprechend zu beschränken. Alternativ oder zusätzlich schaltet der USB-Controller 27 einen der USB-Anschlüsse 26a bis 26c komplett ab, um das vorhandene Leistungsbudget einzuhalten.

Die in der Figur 5 dargestellte USB-Erweiterungskarte 25 erlaubt eine besonders flexible Bereitstellung von zur Verfügung stehender Energie eines Netzteils 3 an Peripheriegeräte, die an das Computersystem 1 angeschlossen sind. Auf diese Weise kann das Computersystem 1 beispielsweise an neuere Versionen des USB-Protokolls angepasst werden, ohne dass hierzu ein Austausch des Netzteils 3 oder des Chipsatzes 6 erforderlich wird.

Figur 6 zeigt eine weitere Ausgestaltung der Erfindung in Form einer Netzwerkkarte 30. Die Netzwerkkarte 30 weist auf Seiten eines Slotwinkels 19 vier Netzwerkanschlüsse 31a bis 31d auf. Die Netzwerkanschlüsse 31a bis 31d sind über einen Netzwerk-Controller 32, beispielsweise einen Switch-Baustein oder einen Hub-Baustein, miteinander verbunden. Die Netzwerkanschlüsse 31a bis 31d werden durch den Netzwerk-Controller 32 als so genannte Power-over-Ethernet-Anschlüsse betrieben. Dabei übernimmt die Netzwerkkarte 30 die Funktion des Energieversorgers (Englisch: Power Sourcing Equipment, PSE). An die Netzwerkanschlüsse 31 können Energieverbraucher (Englisch: Powered Devices, PD) wie beispielsweise sogenannte VoIP-Telefone angeschlossen werden.

Je nach verfügbarer Leistungsklasse der angeschlossenen Netzwerkkomponenten kann die über die Anschlüsse 31 abgegebene Leistung insgesamt über einem Leistungsbudget eines PCIe-Anschlusses der Systemplatine 2 liegen. Zum Ausgleich des eventuell fehlenden Leistungsbudgets ist auf einer Leiterplatte 18 der Netzwerkkarte 30 wie unter Bezugnahme auf die Figur 5 oben beschrieben eine Schaltung zur Leistungsversorgung 28 sowie ein Steckverbinder 12 zur Versorgung der Netzwerkkarte 30 von einer Hilfsversorgungskomponente vorgesehen.

Die im Bereich Power-over-Ethernet (PoE) vorgesehene Versorgungsspannung von typischerweise 36 bis 57 Volt liegt über den typischerweise von einem Netzteil 3 bereitgestellten Versorgungsspannung des Computersystems 1. Zur Umwandlung der Versorgungsspannung des Computersystems 1 auf die über die Netzwerkanschlüsse 31 abgegebene Spannung dient in der Ausgestaltung gemäß Figur 6 ein Spannungswandler 33. Im Ausführungsbeispiel ist der Spannungswandler 33 in die Leistungsversorgung 28 integriert. Der Spannungswandler 33 wird entweder über eine Spannungsversorgungsleitung des Steckverbinders 17, eine Spannungsversorgungsleitung des Steckverbinders 12 oder einer Kombination beider Spannungsquellen mit einer Betriebsenergie versorgt. Beispielsweise kann es sich um einen Schaltwandler mit zwei parallel angeordneten Schaltstufen handeln, dessen Schaltstufen mit dem Steckverbinder 17 beziehungsweise dem Steckverbinder 12 verbunden sind.

Die in den Figuren 1 bis 6 beschriebenen Ausgestaltungen können in vielfältiger Weise miteinander kombiniert werden.

Darüber hinaus sind weitere Abwandlungen des erfindungsgemäßen Konzepts möglich. Beispielsweise kann zur Versorgung von Erweiterungskomponenten mit noch höherer Leistungsaufnahme die Leistung von drei oder mehr Erweiterungsanschlüssen kaskadenartig miteinander kombiniert werden. Insbesondere bei der Vorsehung einer elektrischen Verbindung zwischen einer Mehrzahl von benachbart angeordneten Erweiterungskarten nach dem Daisy-Chain-Prinzip, ist es vorteilhaft, auf jeder der Erweiterungskarten eine Steuerschaltung vorzusehen, die den Energieverbrauch der jeweiligen Karte überwacht und die Weitergabe von eventuell überschüssiger Energie an benachbarte Karten regelt. Zudem ist es auch möglich, Erweiterungsanschlüsse unterschiedlichen Typs zum Zwecke der Stromversorgung miteinander zu kombinieren. Beispielsweise können das Leistungsbudgets eines Slot-Steckverbinders zur Aufnahme einer Erweiterungskarte und eines Pfostensteckers oder einer Steckerbuchse zum Anschluss eines Versorgungskabels eines internen Gerätes, wie beispielsweise eines internen Speicherlaufwerks, miteinander kombiniert werden.

Des Weiteren kann eine Strom- und Datenversorgung in vielen Fällen kombiniert werden. Beispielsweise kann eine Grafikkarte mit einem modifizierten Displayportanschluss vorgesehen werden, der neben den Grafikdaten zusätzlich auch noch die Betriebsenergie zum Betrieb einer Anzeige, insbesondere eines Flüssigkristallmonitors, zur Verfügung stellt. In diesem Fall kann beispielsweise ein Grafikprozessor einer Grafikkarte aus dem Leistungsbudget des Steckplatzes versorgt werden, in den die Grafikkarte selbst eingesteckt ist. Die zusätzliche Leistung für die extern angeschlossene Anzeige kann der Grafikkarte dabei über eine Hilfsversorgungskomponente gemäß einem der oben beschriebenen Ausführungsbeispiele zur Verfügung gestellt werden.

Neben der Versorgung von Grafikkomponenten eignet sich eine derartige Anordnung selbstverständlich auch zur Stromversorgung von externen Massenspeichergeräten, Druckern oder Scannern über ein Datenkabel mit einer integrierten Versorgungsleitung. In diesem Fall bietet sich insbesondere die Verwendung eines USB-Anschlusses gemäß dem USB-Standard 3.1 mit einem Leistungsprofil von mehr als 75 Watt, beispielsweise dem Leistungsprofil 5 mit 100 Watt an.

### Bezugszeichenliste

- 1: Computersystem
- 2: Systemplatine
- 3: Netzteil
- 4: Speicherlaufwerk
- 5: Prozessor
- 6: Chipsatz
- 7: Erweiterungsanschluss
- 8: Grafikkarte
- 9: Steckverbinder
- 10: Steckverbinder
- 11: Spannungswandler
- 12: Steckverbinder
- 13: Datenanschluss
- 14: Hilfsversorgungskarte
- 15: Steckverbinder
- 16: Hilfsversorgungskabel
- 17: Steckverbinder
- 18: Leiterplatte
- 19: Slotwinkel
- 20: Strombegrenzungsschaltung
- 21: Hilfsversorgungsanschluss
- 22: Freihaltebereich
- 23: Hilfsversorgungsstecker
- 25: USB-Erweiterungskarte
- 26: USB-Anschluss
- 27: USB-Controller
- 28: Leistungssteuerung
- 30: Netzwerkkarte
- 31: Netzwerkanschluss
- 32: Netzwerk-Controller
- 33: Spannungswandler

## Patentansprüche

1. Computersystem (1), umfassend:
- eine Stromversorgungseinheit zum Bereitstellen einer Betriebsenergie für das Computersystem (1);
- eine mit der Stromversorgungseinheit verbundene Systemplatine (2) mit einer Mehrzahl von Erweiterungsanschlüssen (7) zum Anschluss einer korrespondierenden Mehrzahl von Erweiterungskomponenten;
- eine an einen ersten Erweiterungsanschluss (7a) der Systemplatine (2) angeschlossene erste Erweiterungskomponente; und
- wenigstens eine elektrisch mit der ersten Erweiterungskomponente verbundene Hilfsversorgungskomponente;
**dadurch gekennzeichnet, dass**
- jedem Erweiterungsanschluss (7) ein festes Leistungsbudget zur Versorgung einer zugehörigen Erweiterungskomponente zugeordnet ist; und
- die wenigstens eine Hilfsversorgungskomponente im Bereich eines zweiten Erweiterungsanschlusses (7b) der Systemplatine (2) angeordnet und dazu eingerichtet ist, wenigstens einen Teil des dem zweiten Erweiterungsanschluss (7b) zugeordneten Leistungsbudgets an die erste Erweiterungskomponente abzugeben.

2. Computersystem (1) nach Anspruch 1, wobei die erste Erweiterungskomponente einen internen Stromverbraucher, insbesondere eine Datenverarbeitungseinheit, umfasst, und wobei der interne Stromverbraucher eine Leistungsaufnahme aufweist, die größer ist als das dem ersten Erweiterungsanschluss (7a) zugeordnete Leistungsbudget.

3. Computersystem (1) nach Anspruch 1, wobei die erste Erweiterungskomponente einen internen Stromverbraucher, insbesondere eine Datenverarbeitungseinheit, und einen Anschluss (26, 31) zum Versorgen einer Zusatzkomponente, insbesondere eines externen Peripheriegeräts, mit einer Betriebsenergie umfasst, und wobei der interne Stromverbraucher und die Zusatzkomponente zusammengenommen eine Leistungsaufnahme aufweisen, die größer ist als das dem ersten Erweiterungsanschluss (7a) zugeordnete Leistungsbudget.

4. Computersystem (1) nach einem der Ansprüche 1 bis 3, wobei wenigstens der erste Erweiterungsanschluss (7a) und der zweite Erweiterungsanschluss (7b) als gleichartige Steckverbinder, insbesondere zur Aufnahme von internen Erweiterungskarten, ausgebildet sind.

5. Computersystem (1) nach einem der Ansprüche 1 bis 4, wobei der erste Erweiterungsanschluss (7a) zur Aufnahme einer internen Grafikkomponente als erste Erweiterungskomponente ausgestaltet ist, insbesondere als Steckverbinder gemäß dem Peripheral Components Interconnect Express, PCIe, oder als PCI for Graphics, PIG, Standard zur Aufnahme einer Grafikkarte (8), und wobei die Graphikkomponente einen Steckverbinder (12) zum Zuführen einer zusätzlichen Betriebsspannung über ein Hilfsversorgungskabel (16) umfasst.

6. Computersystem (1) nach einem der Ansprüche 1 bis 5, wobei die Hilfsversorgungskomponente eine in dem zweiten Erweiterungsanschluss (7b) eingesteckte Hilfsversorgungskarte (14) oder einen in den zweiten Erweiterungsanschluss (7b) eingesteckten Hilfsversorgungsstecker (23) umfasst.

7. Computersystem (1) nach einem der Ansprüche 1 bis 5, wobei die Hilfsversorgungskomponente einen auf der Systemplatine (2) in Nähe des zweiten Erweiterungsanschlusses (7b) angeordneten Hilfsversorgungsanschluss (21) sowie ein mittels eines Steckverbinders mit dem Hilfsversorgungsanschluss (21) verbundenes Hilfsversorgungskabel (16) umfasst, wobei der Hilfsversorgungsanschluss (21) im eingesteckten Zustand die Nutzung des zweiten Erweiterungsanschlusses (7b) durch eine weitere Erweiterungskomponente blockiert.

8. Computersystem (1) nach einem der Ansprüche 1 bis 7, wobei die erste Erweiterungskomponente
- einen ersten Steckverbinders (17) zum Anschluss der ersten Erweiterungskomponente an den ersten Erweiterungsanschluss(7a) ;
- einen zweiten Steckverbinder (12) zum Zuführen einer von dem Leistungsbudget des ersten Erweiterungsanschlusses (7a) unabhängigen Betriebsenergie von der an dem zweiten Erweiterungsanschluss (7b) der Systemplatine (2) angeschlossenen Hilfsversorgungskomponente;
- wenigstens einen dritten Steckverbinder zum Versorgen einer Zusatzkomponente, insbesondere eines externen Peripheriegeräts, mit einer Betriebsenergie; und
- eine mit dem ersten Steckverbinders (17), dem zweiten Steckverbinder (12) und dem wenigstens einen dritten Steckverbinder elektrisch verbundene Leistungssteuerung (28), die dazu eingerichtet ist, die über den ersten Steckverbinders (17) aufgenommene Leistung auf das feste Leistungsbudget zu begrenzen und zumindest einen Teil einer von der ersten Erweiterungskomponente aufgenommenen und/oder über den wenigstens dritten Steckverbinder abgegebenen Betriebsenergie, die das feste Leistungsbudget übersteigt, von der Hilfsversorgungskomponente über den zweiten Steckverbinder (12) aufzunehmen, umfasst.

9. Computersystem (1) nach Anspruch 8, wobei die erste Erweiterungskomponente einen Spannungswandler (33) umfasst, wobei der Spannungswandler (33) dazu eingerichtet ist, eine über den ersten Steckverbinder (17) und/oder den zweiten Steckverbinder (12) bereitgestellte erste Betriebsspannung in eine zweite, über den wenigstens einen dritten Steckverbinder bereitgestellte Betriebsspannung umzuwandeln.

10. Computersystem (1) nach Anspruch 8 oder 9, bei dem der wenigstens eine dritte Steckverbinder als Peripheriegeräteanschluss (26, 31) zur kombinierten Übertragung einer Betriebsspannung und von Daten, insbesondere als Universal Peripheral Bus, USB, Anschluss (26) oder Powered-USB-Anschluss, ausgestaltet ist, wobei die Daten für den dritten Steckverbinder über den ersten Steckverbinder (17) an die Systemplatine (2) übertragen werden.

11. Computersystem (1) nach einem der Ansprüche 1 bis 10, wobei die Hilfsversorgungskomponente
- einen ersten Steckverbinder (17) zum Anschluss der Hilfsversorgungskomponente an den zweiten Erweiterungsanschluss (7b);
- einen zweiten Steckverbinder (15) zum Abführen wenigstens eines Teils des dem zweiten Erweiterungsanschluss (7b) zugeordneten Leistungsbudgets an die in dem ersten Erweiterungsanschluss (7a) der Systemplatine angeordnete erste Erweiterungskomponente des Computersystems (1) umfasst.

12. Verwendung eines Computersystems (1) nach einem der Ansprüche 1 bis 11.

## Claims

1. Computer system (1), comprising:
- a power supply unit for providing operating energy for the computer system (1);
- a system board (2) connected to the power supply unit and having a multitude of expansion connections (7) for connection of a corresponding multitude of expansion components;
- a first expansion component connected to a first expansion connection (7a) of the system board (2); and
- at least one auxiliary supply component electrically connected to the first expansion component;
**characterized in that**
- a fixed power budget for supplying an associated expansion component is assigned to each expansion connection (7); and
- the at least one auxiliary supply component is arranged in the region of a second expansion connection (7b) of the system board (2) and configured to output at least a part of the power budget assigned to the second expansion connection (7b), to the first expansion component.

2. The computer system (1) according to claim 1, wherein the first expansion component comprises an internal electrical consumer, in particular a data processing unit, and wherein the internal electrical consumer has an electrical power consumption greater than the power budget assigned to the first expansion connection (7a).

3. The computer system (1) according to claim 1, wherein the first expansion component comprises an internal electrical consumer, in particular a data processing unit, and a connection (26, 31) to supply an additional component, in particular an external peripheral device, with operating energy, and wherein the internal electrical consumer and the additional component taken together have an electrical power consumption greater than the power budget assigned to the first expansion connection (7a).

4. The computer system (1) according to any one of claims 1 to 3, wherein at least the first expansion connection (7a) and the second expansion connection (7b) are configured as equivalent-type plug connectors, in particular for receiving internal expansion cards.

5. The computer system (1) according to any one of claims 1 to 4, wherein the first expansion connection (7a) is configured to receive an internal graphics component as a first expansion component, in particular as a plug connector according to the PCI Express standard, or the PCI for Graphics, PIG, standard for receiving a graphics card (8), and wherein the graphics component comprises a plug connector (12) to supply an additional operating voltage via an auxiliary supply cable (16).

6. The computer system (1) according to any one of claims 1 to 5, wherein the auxiliary supply component comprises an auxiliary supply card (14) inserted in the second expansion connection (7b) or an auxiliary supply plug (23) inserted in the second expansion connection (7b).

7. The computer system (1) according to any one of claims 1 to 5, wherein the auxiliary supply component comprises an auxiliary supply connection arranged on the system board (2) in a vicinity of the second expansion connection (7b) as well as a auxiliary supply cable (16) connected to the auxiliary supply connection (21) by a plug connector, wherein the auxiliary supply connection (21) in the inserted state blocks use of the second expansion connection (7b) by a further expansion component.

8. The computer system (1) according to any one of claims 1 to 7, wherein the first expansion component comprises
- a first plug connector (17) for connection of the first expansion component to the first expansion connection (7a) ;
- a second plug connector (12) to receive an operating energy, which is independent of the power budget of the first expansion connection (7a), of the auxiliary supply component connected to the second expansion connection (7b) of the system board (2);
- at least one third plug connector to supply an additional component, in particular an external peripheral device, with an operating energy; and
- a power control circuit (28) electrically connected to the first plug connector (17), the second plug connector (12) and the at least one third plug connector, the power control circuit (28) adapted to limit the power taken-up via the first plug connector (17) to the fixed power budget and to take-up from the auxiliary supply component via the second plug-connector (12), at least part of an operating energy exceeding the fixed power budget, taken up by the first expansion component and/or delivered via the at least third plug connector.

9. The computer system (1) according to claim 8, wherein the first expansion component comprises a voltage converter (33), wherein the voltage converter (33) is configured to convert a first operating voltage provided via the first plug connector (17) and/or the second plug connector (12) into a second operating voltage provided via the at least one third plug connector.

10. The computer system (1) according to claim 8 or 9, in which the at least one third plug connector is configured as a peripheral device connection (26, 31) for combined transfer of operating voltage and data, in particular as a Universal Serial Bus, USB, connection (26) or Powered USB connection, wherein the data for the third plug connector are transmitted to the system board (2) via the first plug connector (17).

11. The computer system (1) according to any one of claims 1 to 10, wherein the auxiliary supply component comprises
- a first plug connector (17) for connection of the auxiliary supply component to the second expansion connection (7b); and
- a second plug connector (15) for delivering at least part of the power budget assigned to the second expansion connection (7b) to the first expansion component of the computer system (1) arranged in the first expansion connection (7a) of the system board (2).

12. Use of a computer system (1) according to any one of claims 1 to 11.

## Revendications

1. Système informatique (1) comprenant :
- une unité d'alimentation d'énergie pour la fourniture d'une énergie de fonctionnement pour le système informatique (1) ;
- une carte système (2) liée à l'unité d'alimentation d'énergie avec une multitude de ports d'extension (7) pour connecter une pluralité de composants d'extension correspondante ;
- un premier composant d'extension branché à un premier port d'extension (7a) de la carte système (2) ; et
- au moins un composant d'alimentation auxiliaire connecté de manière électrique avec le premier composant d'extension,
**caractérisé en ce que**
- chaque port d'extension (7) est attribué un budget de puissance fixe pour l'alimentation d'un composant d'extension associé, et
- que l'au moins un composant d'alimentation auxiliaire est disposé dans la zone d'un deuxième port d'extension (7b) de la carte système (2) et configuré de manière à fournir, au premier composant d'extension, au moins une partie du budget de puissance attribué au deuxième port d'extension (7b) .

2. Système informatique (1) selon la revendication 1, dans lequel le premier composant d'extension comprend un consommateur de courant interne, en particulier une unité de traitement des données, et dans lequel le consommateur de courant interne présente une puissance absorbée qui est plus grande que le budget de puissance attribué au premier port d'extension (7a).

3. Système informatique (1) selon la revendication 1, dans lequel le premier composant d'extension comprend un consommateur d'énergie interne, en particulier une unité de traitement des données et un port (26, 31) pour l'alimentation d'un composant supplémentaire, en particulier d'un appareil périphérique externe, en une énergie de fonctionnement, et dans lequel le consommateur d'énergie interne et le composant supplémentaire confondus présentent une puissance absorbée, qui est plus grande que le budget de puissance attribué au premier port d'extension (7a).

4. Système informatique (1) selon l'une des revendications 1 à 3, dans lequel au moins le premier port d'extension (7a) et le deuxième port d'extension (7b) sont configurés comme connecteurs enfichables similaires, en particulier pour le logement des carte d'extension interne.

5. Système informatique (1) selon l'une quelconque des revendication 1 à 4, dans lequel le premier port d'extension (7a) est configuré pour le logement d'un composant graphique interne, comme premier composant d'extension, en particulier comme connecteur enfichable selon le Peripheral Components Interconnect Express, PCIe, ou comme PCI for Graphics , PIG, standard pour le logement d'une carte graphique (8), et dans lequel le composant graphique comprend un connecteur enfichable (12) pour délivrer une tension de fonctionnement supplémentaire par l'intermédiaire d'un câble d'alimentation auxiliaire (16).

6. Système informatique (1) selon l'une quelconque des revendications 1 à 5, dans lequel le composant d'alimentation auxiliaire comprend une carte d'alimentation auxiliaire (14) insérée dans le deuxième port d'extension (7b) ou un connecteur d'alimentation auxiliaire (23) inséré dans le deuxième port d'extension (7b) .

7. Système informatique (1) selon l'une des revendications 1 à 5, dans lequel le composant d'alimentation auxiliaire comprend un port d'alimentation auxiliaire (21) disposé près du deuxième port d'extension (7b) sur la carte système (2), ainsi qu'un câble d'alimentation auxiliaire (16) connecté au connecteur d'alimentation auxiliaire (21) au moyen d'un connecteur enfichable, dans lequel le port d'alimentation auxiliaire (21), dans l'état enfiché, bloque l'utilisation du deuxième port d'extension (7b) au moyen d'un autre composant d'extension.

8. Système informatique (1) selon l'une quelconque des revendications 1 à 7, dans lequel le premier composant d'extension comprend
- un premier connecteur enfichable (17) pour le raccordement du premier composant d'extension au premier port d'extension (7a);
- un deuxième connecteur enfichable (12) pour l'alimentation en une énergie de fonctionnement indépendante du budget de puissance du premier port d'extension (7a) du composant d'alimentation auxiliaire raccordé au deuxième port d'extension (7b) de la carte système (2);
- au moins un troisième connecteur enfichable pour l'alimentation d'un composant supplémentaire, en particulier d'un appareil périphérique externe, en une énergie de fonctionnement ; et
- une commande de puissance (28) reliée de manière électrique au premier connecteur enfichable (17), au deuxième connecteur enfichable (12) et à l'au moins un troisième connecteur enfichable, qui est configurée pour limiter, au moyen du premier connecteur enfichable (17), la puissance absorbée qui dépasse le budget de puissance fixe par le deuxième connecteur enfichable (12) au budget de puissance fixe et pour absorber au moins une partie d'une énergie de fonctionnement absorbée par le premier composant d'extension et/ou délivrée par l'intermédiaire de l'au moins troisième connecteur enfichable.

9. Système informatique (1) selon la revendication 8, dans lequel le premier composant d'extension comprend un transformateur de tension (33), dans lequel le transformateur de tension (33) est configuré pour transformer une première tension de fonctionnement fournie via le premier connecteur enfichable (17) et/ou le deuxième connecteur enfichable (12), en une tension de fonctionnement fournie par au moins le troisième connecteur enfichable.

10. Système informatique (1) selon la revendication 8 ou 9, dans lequel l'au moins un troisième connecteur enfichable est configuré comme connexion d'appareil périphérique (26, 31) pour une transmission combinée d'une tension de fonctionnement et de données, en particulier comme connecteur bus périphérique universel (26), USB, ou connecteur USB alimenté, dans lequel les données pour le troisième connecteur enfichable sont transmises vers la carte système (2) par le biais du premier connecteur enfichable (17).

11. Système informatique (1) selon l'une quelconque des revendications 1 à 10, dans lequel le composant d'alimentation auxiliaire comprend
- un premier connecteur (17) enfichable pour le raccordement du composant d'alimentation auxiliaire au deuxième port d'extension (7b); et
- un deuxième connecteur (15) enfichable pour le décharge d'au moins une partie du budget de puissance attribuée au deuxième port d'extension (7b) au premier composant d'extension du système informatique (1) disposé au premier port d'extension (7a) de la carte système (2).

12. L'utilisation d'un système informatique (1) selon l'une des revendications 1 à 11.
